# FASCICULE DE BREVET EUROPEEN

(11) **EP 1 400 486 B1**
(45) Date de publication et mention de la délivrance du brevet: **30.03.2011**
(21) Numéro de dépôt: 02020949.0
(22) Date de dépôt: 19.09.2002
(51) Int. Cl.: B67D 7/60, B67D 7/80, B65D 35/22, B65D 35/24, B65D 83/14, A23G 9/28, A23G 9/20, B65B 3/10, B65B 3/04, B65B 31/00, A23G 9/46

(54) **Procédé de conditionnement et distribution d'un dessert glacé**
Verfahren zum Aufbewahren und Ausgeben von gefrorenen Süssspeisen
Process for packaging and dispensing frozen desserts

(43) Date de publication de la demande: 24.03.2004
(73) Titulaire: Nestec S.A., 1800 Vevey (CH)
(72) Inventeur: Levy, Jérôme, 80000 Amiens (FR); Ferrari-Philippe, Fabiana, 60000 Beauvais (FR); Lanoy, Thierry, 60000 Beauvais (FR)
(74) Mandataire: Rossand, Isabelle

(56) Documents cités:
- EP-A- 1 061 006
- EP-A- 1 151 940
- WO-A-95/29597
- DE-A- 3 814 837
- FR-A- 2 195 916
- US-A- 3 615 718
- US-A- 3 677 443
- US-A- 3 896 970
- US-A- 4 685 597
- US-A- 5 894 030
- US-A- 6 082 120
- PATENT ABSTRACTS OF JAPAN vol. 015, no. 211 (C-0836), 29 mai 1991 (1991-05-29) & JP 03 061450 A (OSAKA GAS CO LTD), 18 mars 1991 (1991-03-18)

## Description

L'invention concerne un procédé pour le conditionnement d'un dessert glacé, consistant mais malléable, et pour sa distribution sous pression à l'état foisonné, le taux de foisonnement pouvant être choisi indépendamment de la consistance dudit dessert.

Lorsque l'on désire distribuer un dessert glacé, à l'état foisonné, c'est-à-dire sous forme aérée, il est connu par le brevet US A 4 421 778 de mousser un mix pour crème glacée ou milk shake pour le foisonner, de remplir. des portions du mix foisonné dans des récipients qui sont ensuite placés dans un congélateur et où le produit est ensuite conservé à température de congélation. Le produit est cuillérable à cette température. En fait l'étape de moussage à température positive avec introduction d'air crée un foisonnement qui n'est pas stabilisé. Il n'y a aucune indication que le produit peut être introduit dans un container pressurisé et peut être distribué à la température d'entreposage à froid depuis ce container sous forme d'un dessert glacé de foisonnement stable.

Par ailleurs on connait, par exemple du brevet US A 4 659 575 ou du brevet US A 367 7 443, un procédé et un appareil permettant d'introduire un gaz foisonneur, le dioxyde d'azote, dans un mix liquide, donc non congelé, à une pression élevée dans le but d'entraîner suffisamment de gaz dans la crème glacée pour produire le foisonnement désiré. Le mix non congelé ayant subi cette pré-aeration est ensuite soutiré d'un tank de mélange le contenant vers un conteneur servant à le distribuer après qu'une quantité suffisante de gaz ait été entraînée, puis il est congelé ultérieurement au lieu de distribution.

Pour éviter l'inconvénient de l'instabilité du foisonnement d'un mix liquide, on pourrait imaginer de mettre le produit à conditionner à l'état liquide dans le récipient de conditionnement et d'introduire ensuite dans ce récipient un gaz propulseur légèrement soluble dans ledit produit liquide, après quoi on refroidirait le récipient à la température de distribution du produit, température à laquelle il est pâteux ; dans ce cas, le produit est conditionné à l'état pâteux non foisonné et il est extrudé sous la poussée du gaz propulseur : à la sortie de l'organe de distribution, le produit serait mis à l'état foisonné par la détente du gaz propulseur dissous dans ledit produit. Cependant, cette façon de procéder n'est pas satisfaisante pour deux raisons :
- d'une part, la quantité du gaz propulseur dissoute dans le produit est difficilement contrôlable, de sorte que le foisonnement obtenu n'est pas constant et que la quantité de gaz restant disponible pour la propulsion du produit n'est donc pas non plus constante ;
- et, d'autre part, la quantité de gaz propulseur dissoute dans le produit est évidemment fonction de la pression du gaz, laquelle est imposée par l'extrudabilité du produit pâteux, d'où il résulte que, pour un produit donné, l'état de foisonnement susceptible d'être obtenu à la distribution est nécessairement lié à la pression du gaz propulseur et à la nature dudit gaz.

La présente invention a pour but de proposer un procédé de conditionnement et de distribution d'un dessert glacé, consistant mais malléable, par lequel d'une part, on puisse conditionner ledit produit en récipient pressurisé avec une pression suffisante compte tenu de la viscosité du produit et, d'autre part, on puisse choisir le taux de foisonnement du produit à la sortie du récipient pressurisé indépendamment de la pression requise pour la propulsion du produit hors du récipient ainsi que la vitesse de sortie du produit hors du récipient.

Grâce à un tel procédé, il devient notamment possible de distribuer un dessert glacé, tel que celui décrit par exemple dans le brevet européen EP B 878 998 ou dans la demande de brevet français FR 02 05620, en choisissant le taux de foisonnement que l'on désire pour le produit distribué à la sortie du récipient; il est, en effet, désirable de ne pas distribuer un tel dessert glacé sous forme de pâte compacte mais il est également désirable d'éviter une distribution sous forme d'une mousse trop aérée.

L'invention est basée en partie sur le fait que l'on choisit pour la distribution deux gaz différents dont l'un a la fonction de propulsion et l'autre la fonction de foisonnement. Le gaz propulseur est sensiblement insoluble dans le produit à distribuer mis à l'état liquide alors que le gaz foisonneur est fortement soluble dans ledit produit liquide. Le foisonnement du produit distribué sera dès lors fonction de la quantité et de la solubilité du gaz foisonneur introduit dans le récipient, alors que l'éjection du produit sera fonction de la pression du gaz propulseur introduit dans le récipient.

La présente invention a, en conséquence, pour objet un procédé pour le conditionnement d'un dessert glacé, consistant mais malléable, et pour sa distribution sous pression à l'état foisonné, procédé dans lequel on dispose le produit dans un conteneur équipé d'un organe de distribution puis, après avoir mis ledit organe de distribution en position fermée, on pressurise ledit conteneur par un gaz propulseur à une pression suffisante pour assurer une distribution convenable compte tenu de la consistance du produit à distribuer et des caractéristiques de l'organe de distribution, caractérisé par le fait que:
a) on choisit un gaz propulseur sensiblement insoluble dans le produit à distribuer;
b) on choisit un gaz foisonneur différent du gaz propulseur et fortement soluble dans le produit à distribuer pour générer le foisonnement du produit à sa distribution, la quantité de gaz foisonneur mise en oeuvre étant définie en fonction du degré de foisonnement désiré à la distribution, la dissolution du gaz foisonneur dans le produit à distribuer étant assurée par mise en contact du gaz foisonneur avec ledit produit dans un freezer et
c) on assure le passage dudit produit à l'état pâteux puis sa distribution par ouverture de l'organe de distribution, ledit produit foisonnant au degré désiré, prédéterminé au remplissage comme décrit dans l'étape 1b, par détente du gaz foisonneur qui y est dissous.

Pour mettre en oeuvre le procédé, on traite un mix pour crème glacée dans un freezer que l'on alimente en gaz foisonneur de manière à réaliser une congélation et un foisonnement partiels dudit mix, dans des conditions de température et de pression favorisant une bonne dissolution du gaz foisonneur dans ledit mix. En pratique, on préfère opérer à une température d'environ - 8 °C à - 11 °C en sortie et sous une pression constante d'atmosphérique à 10 bars au dessus de la pression atmosphérique dans le freezer.

Comme gaz foisonneur, on utilise un gaz fortement soluble dans le mix, de préférence choisi parmi le protoxyde d'azote (N₂O) et le dioxyde de carbone.

On met en place le mix partiellement congelé et partiellement foisonné dans le conteneur au moyen d'un dispositif de dosage assurant le maintient de la pression initiale dans les conduits et dans l'unité de dosage, par exemple en exerçant une contre pression en amont de l'organe de distribution. Cette manière de procéder permet de limiter l'expansion du volume du produit lors du remplissage par détente partielle du gaz foisonneur.

Selon un premier mode de réalisation de l'étape de remplissage du procédé, on utilise comme dispositif de remplissage une buse de dosage animée d'un mouvement de monte et baisse permettant le remplissage en remontant depuis le fond des conteneurs du type dit "bottom up filler", de manière à maximiser le remplissage et à éviter la formation de poches vides de produit. On réalise le remplissage du conteneur, puis sa fermeture par l'organe de distribution, suffisamment rapidement pour limiter l'expansion.

Dans un second mode de réalisation, le produit est rempli à travers l'organe de distribution préalablement fixé sur le conteneur. Dans ce cas, le piston est positionné dans le haut du conteneur, contre l'organe de distribution, afin de limiter les poches d'air dans le produit. Ce second mode est préféré, car il est plus efficace pour limiter l'expansion au moment du remplissage.

Dans le procédé qui a été ci-dessus défini, on utilise comme conteneur un récipient rigide, dans lequel on introduit d'une part le produit à conditionner qui contient la quantité de gaz foisonneur nécessaire pour obtenir l'état foisonné souhaité du produit distribué et d'autre part le gaz propulseur à la pression désirée pour la distribution.

Selon un premier mode de mise en oeuvre du procédé, on utilise, comme conteneur, un récipient rigide cylindrique dans lequel on dispose un piston coulissant, qui divise le récipient en deux compartiments, dont l'un est fermé par l'organe de distribution alors que l'autre comporte une valve permettant l'injection du gaz propulseur et le maintien de la pression, le produit contenant le gaz foisonneur étant introduit dans le récipient avant de le fermer par l'organe de distribution, ou à travers l'organe de distribution lui-même.

Selon un deuxième mode de mise en oeuvre, on utilise un récipient rigide contenant une poche souple. Le conteneur est équipé d'un côté d'un organe de distribution relié à la poche, de l'autre côté d'une valve permettant l'injection de gaz propulseur et le maintien en pression du conteneur.

Selon ce deuxième mode de mise en oeuvre, on utilise, comme conteneur, le récipient rigide équipé intérieurement de la poche souple reliée à l'extérieur par l'organe de distribution solidaire du récipient, on met en place dans le récipient, à travers l'organe de distribution, à l'intérieur de la poche, le produit contenant le gaz foisonneur et l'on injecte ensuite le gaz propulseur dans la poche à travers la valve.

On peut, dans le premier mode de mise en oeuvre, puisque l'on doit conditionner et distribuer un produit alimentaire, utiliser un récipient et un piston coulissant métalliques, qui pourront sans aucune difficulté subir un traitement d'aseptisation conventionnel; avantageusement, le récipient et le piston coulissant sont constitués du même métal, ce qui évite tout problème de dilatation différentielle et maintient un bon coulissement du piston dans le récipient. Cependant, le piston peut aussi être réalisé en matière plastique, par exemple en polyolefine, étant entendu que le produit à distribuer étant alimentaire, la matière plastique utilisée doit être autorisée pour un conditionnement alimentaire.

Avantageusement, dans cette variante, on utilise un piston susceptible de coulisser dans le récipient et l'on injecte le gaz propulseur par la valve, le piston venant alors en appui sur le produit: le taux de foisonnement du produit distribué est déterminé par la quantité de gaz foisonneur contenue dans le produit injecté par l'organe de distribution (exprimée en 1 de gaz pour 100 1 de mix de crème glacée, par exemple) et la pression est définie pour optimiser le temps de remplissage du récipient. Avant l'injection du gaz propulseur à une pression supérieure à la pression dans le compartiment produiton prépare le produit à distribuer chargé, à une pression supérieure à la pression atmosphérique, de gaz foisonneur partiellement dissous et, on dose ledit produit chargé dans le conteneur et on injecte le gaz propulseur dans ledit conteneur pour pressuriser le produit à distribuer à une pression supérieure à celle de remplissage du produit.

Le produit à distribuer étant un produit alimentaire, pour que la conservation du produit en cours de stockage s'effectue de façon satisfaisante, on doit, bien entendu, choisir des gaz propulseur et foisonneur acceptables compte tenu des normes alimentaires existantes ; selon l'invention, on peut avantageusement choisir comme gaz propulseur le diazote (N₂) ou de l'air ayant un point de rosée inférieur à la température minimale à laquelle le conteneur sera exposé entre la fabrication du produit et son utilisation, et comme gaz foisonneur le protoxyde d'azote (N₂O).

Selon l'invention, on a constaté que l'on obtenait de bons résultats quant au niveau du foisonnement et sa stabilité lorsqu'on utilisait de 80 à 200 l de gaz foisonneur, notamment de N₂O/100 l de mix. On obtient ainsi un foisonnement d'environ 5 à 35 % en volume au niveau du freezer (selon la pression dans ledit freezer) et d'environ 50 à 100 % en volume dans le produit final délivré. Cette différence de foisonnement est due au fait que la plupart du gaz foisonneur est dissous dans le freezer lors du travail de foisonnement et de congélation. Ce gaz se désolubilise partiellement en quittant le freezer et d'une manière nettement plus forte au niveau de l'organe de distribution de la bombe aérosol lors de la distribution à la pression ambiante. Il est avantageux selon l'invention de veiller à ce que le foisonnement soit le plus faible possible au moment du remplissage de manière à maximiser la quantité de produit dosé dans les conteneurs. Par contre on aura avantage à ce que le produit sortant de l'organe de distribution ait un foisonnement comparable à ce qui est courant dans les crèmes glacées. Ceci résulte en une augmentation de la quantité de produit dosé à volume constant. Les meilleurs résultats ont été obtenus à une pression constante de 4 à 5 bar environ dans le freezer et en maintenant une contre-pression de même ordre, dans les conduits d'amenée vers l'élément de dosage et dans celui-ci.

Pour mieux faire comprendre l'objet de l'invention, on va en décrire maintenant, à titre d'exemples purement illustratifs et non limitatifs, deux modes de mise en oeuvre représentés schématiquement sur le dessin annexé et correspondant au conditionnement d'un dessert glacé.

Sur ce dessin :
les figures 1 à 3 ainsi que 7 et 8 représentent les étapes d'une première variante du procédé selon l'invention,
les figures 4 à 6 représentent les étapes d'une deuxième variante du procédé selon l'invention et
les figures 9 à 11 représentent différents types de valves de remplissage du gaz propulseur utilisables dans le procédé selon l'invention.

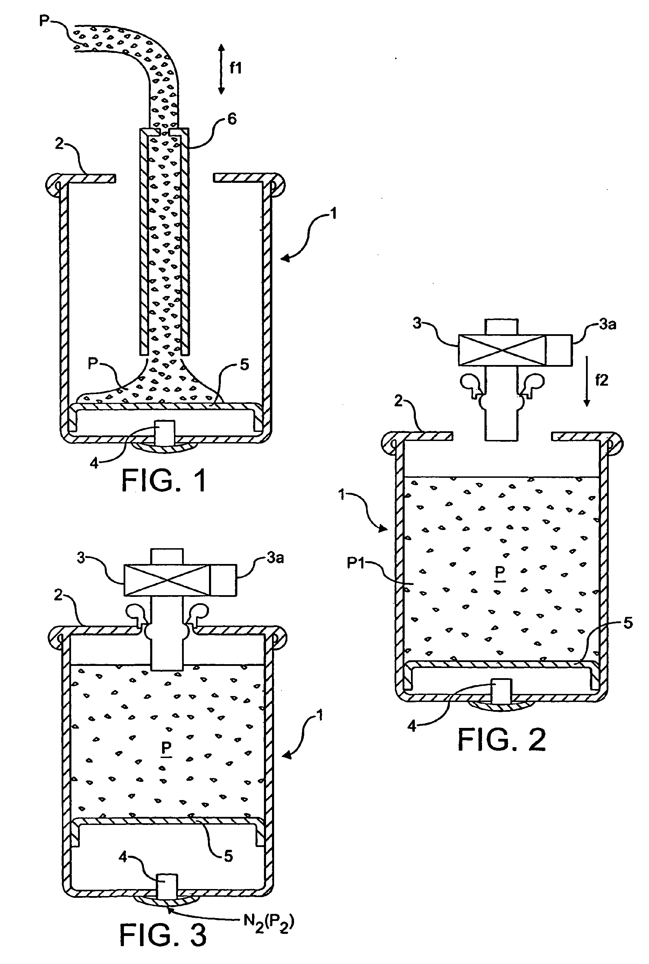

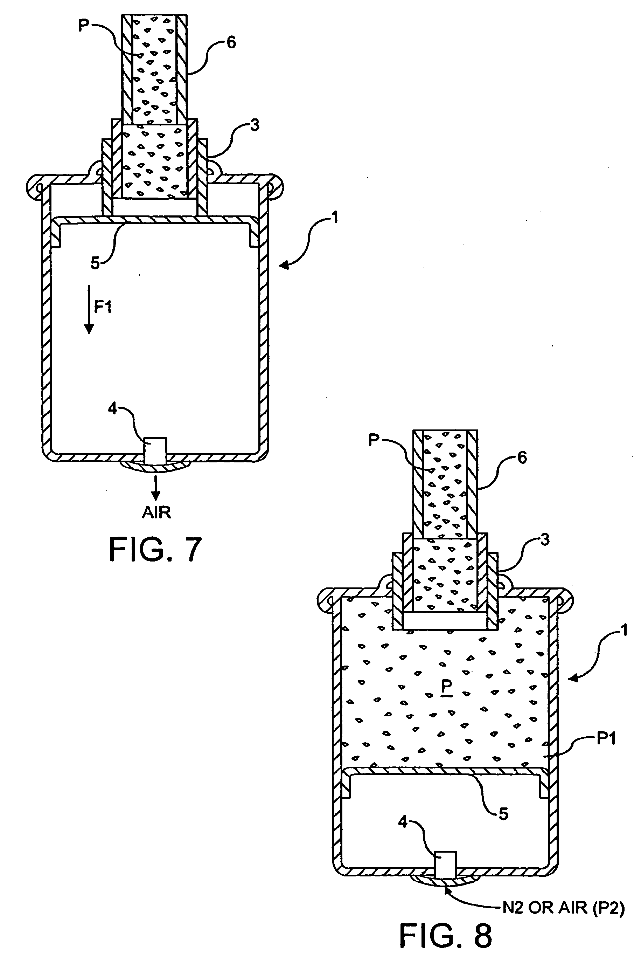

En se référant au dessin, on voit que, pour l'ensemble des figures, on a désigné par 1 dans son ensemble un conteneur métallique cylindrique qui comporte un fond et une partie supérieure 2 rapportée par sertissage sur la paroi latérale dudit conteneur; dans la zone centrale de cette partie 2 est également rapportée par sertissage une coupelle, qui porte, en son centre un organe de distribution 3 comportant un mécanisme rotatif, qui permet son ouverture ou sa fermeture, par action sur une ailette de manoeuvre 3a. Bien que cela ne soit pas décrit dans les exemples correspondant aux figures 1 à 3, on pourrait, bien entendu, utiliser, à la place du mécanisme rotatif précité, un poussoir translatable. Un tel poussoir est représsenté en liaison avec les figures 7 et 8. L'organe de distribution 3 comporte, en sortie, une buse pour conformer la section du boudin de produit distribué. Le produit conditionné est à l'état pâteux, consistant mais malléable. Pour les deux variantes représentées sur le dessin, le gaz propulseur utilisé est le diazote ou l'air comprimé ayant un point de rosée inférieur à la température minimale à laquelle le conteneur sera exposé entre la fabrication du produit et son utilisation, et le gaz foisonneur est le protoxyde d'azote.

Dans les exemples suivants , le produit mis en place dans le récipient 1 a la formulation suivante (% en poids) :

| | | |
|---|---|---|
| Matière grasse | | 10,9 % |
| Lait entier en poudre | | 7,35 % |
| Dérivé d'origine laitière | | 10,9 % |
| Glucose et sirop de glucose | | 16,1 % |
| Emulsifiant | | 0,38% |
| Epaississant | environ | 0,13 % |
| Blanc d'oeuf | | 0,05 % |
| Colorants et arômes | | 0,08 % |
| Eau | | 54,11% |

Avant la mise en place du produit dans le conteneur 1, on peut procéder , de façon connue, à une aseptisation dudit récipient étant donné que le produit conditionné est alimentaire.

Pour sa mise en place, le produit, dont la formulation du mix a été donnée ci-dessus, est traité dans un freezer à une température de -8,5°C à -10° C, alimenté en protoxyde d'azote à la place de l'air utilisé habituellement pour le foisonnement, la quantité de protoxyde d'azote introduite dans le mix correspondant à 140 à 145 l N₂O/ 100 l de mix. On conditionne le produit sortant du freezer dans le conteneur 1 sous une pression de 4 à-5 bar. On introduit ensuite le gaz propulseur, ( diazote ou air comprimé ayant un point de rosée inférieur à -40°C) à une pression d'environ 10 bar à travers la valve 4. Lorsque le conditionnement du produit est terminé, le produit est porté une température inférieure ou égale à -18°C , température à laquelle ledit produit se trouve à l'état pâteux. Le volume interne du conteneur 1 vide, sans piston et sans organe de distribution est d'environ 0,8 litre et le volume de produit introduit dans le conteneur pour distribution ultérieure est d'environ 0,6 litre.

Les figures 1 à 3, 7 et 8 représentent les différentes étapes de la première variante du procédé selon l'invention. Dans cette variante, le conteneur 1 comporte sur sa base une valve 4 et il comporte intérieurement un piston coulissant 5 (voir figure 1). Sur le dessin, on a représenté, dans un but de simplification, un piston 5 dont la face circulaire est plane; cependant, de façon connue, on peut utiliser un piston, dont la face circulaire est conformée de façon à présenter en son centre une cavité permettant de loger la partie de l'organe de distribution 3, qui est en saillie à l'intérieur du conteneur 1: de la sorte, on améliore le taux de vidange du récipient lors de la distribution.

Dans un premier exemple, décrit on met en place dans le conteneur exempt de la coupelle portant l'organe de distribution 3, le produit semi-congelé et foisonné P au moyen d'une buse de remplissage 6 animée d'un mouvement de monte et baisse selon la flèche f1, le remplissage étant effectué de bas en haut par translation verticale de la buse de remplissage 6. Le remplissage est effectué rapidement et lorsque le conteneur est rempli, on sertit la coupelle portant l'organe de distribution 3 (mise en place selon f2). Le piston 5 est alors en position basse (voir figure 2) et la pression P1. On injecte du diazote à une pression P2 égale à 10 bar (ou de l'air comprimé ayant un point de rosée égal ou inférieur à -40°C) au dessous du piston 5, l'introduction s'effectuant à travers la valve 4 (voir figure 3).

On descend alors la température du produit dans le conteneur 1 jusqu'à une température égale ou inférieure à -18°C, en faisant passer le conteneur rempli du produit à travers un tunnel de congélation dont la température est -35 à -38°C, le produit à distribuer prenant ainsi sa consistance pâteuse de distribution

Dans un deuxième exemple, on remplit le produit P à travers l'organe de distribution 3 préalablement fixé sur le conteneur 1, comme illustré sur la figure 7. Dans ce cas, le piston 5 est positionné avant le remplissage dans le haut du conteneur, contre l'organe de distribution. Au fur et à mesure que le produit P est introduit dans le conteneur, le piston 5 se déplace vers le fond du conteneur 1 suivant la flèche F1. L'air contenu entre le piston et le fond du conteneur est chassé à travers la valve 4. Cette façon de procéder permet de limiter les poches d'air dans le produit conditionné. Le piston 5 est alors en position basse (figure 8) et la pression est P1. On injecte du diazote à une pression P2 égale à 10 bar (ou de l'air comprimé ayant un point de rosée égal ou inférieur à -40°C) au dessous du piston 5, l'introduction s'effectuant à travers la valve 4 ( figure 8).

On descend alors la température du produit dans le conteneur 1 jusqu'à une température égale ou inférieure à -18°C, en faisant passer le conteneur rempli du produit à travers un tunnel de congélation dont la température est -35 à -38°C, le produit à distribuer prenant ainsi sa consistance pâteuse de distribution.

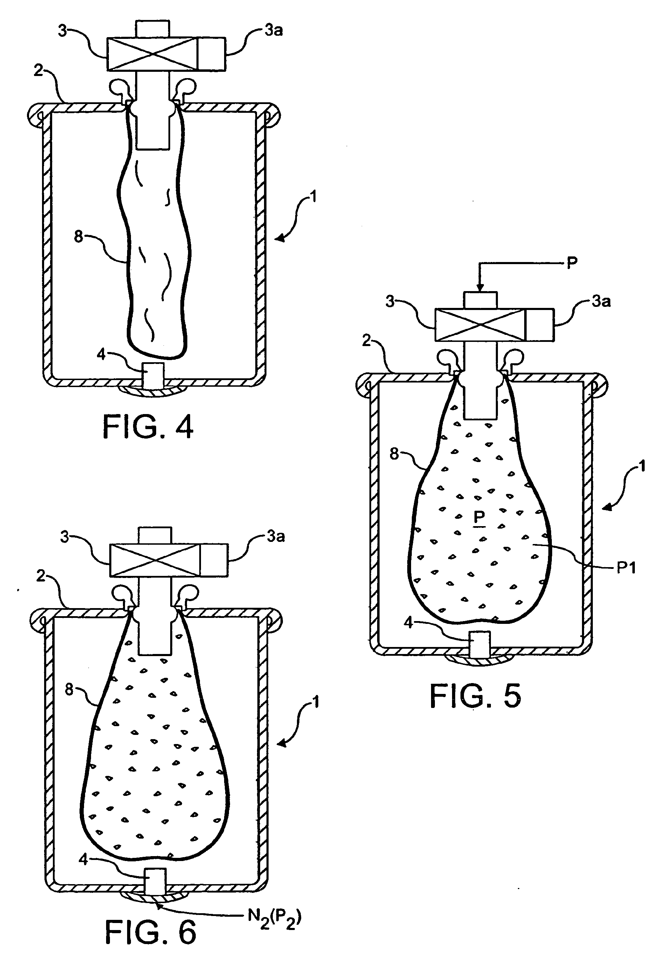

Le mode de remplissage décrit dans ce second exemple est préféré, car il est plus efficace pour limiter l'expansion du produit au moment du remplissage. Dans la seconde variante représentée sur les figures 4 à 6, le conteneur 1 comporte sur son fond une valve 4 à travers laquelle peut s'effectuer l'injection du gaz propulseur, (diazote ou air comprimé ayant un point de rosée inférieur à la température minimale à laquelle le conteneur sera exposé entre la fabrication du produit et son utilisation), qui constitue le gaz propulseur. Au niveau du sertissage, sur le conteneur 1, de la coupelle qui porte l'organe de distribution 3, on a fixé, à l'intérieur du conteneur 1, une poche souple 8 (voir figure 4). On introduit alors le produit partiellement congelé et foisonné P dans la poche 8 à travers l'organe de distribution 3 en position ouverte (voir figure 5). On ferme l'organe de distribution 3 et on injecte le gaz propulseur à une pression de 8 à 15 bar à travers la valve 4 (voir figure 6). Au cours du remplissage, la pression dans le conteneur 1 est donc passée de la pression atmosphérique à la pression P₁ d'atmosphérique à 10 bars au-dessus de la pression atmosphérique bar, puis à la pression P₂ de 8 à 15 bar au dessus de la pression atmosphériquepar l'injection finale du gaz propulseur.

Plusieurs solutions pour les systèmes de valve 4 sont connues et ont été utilisées dans les exemples décrits.

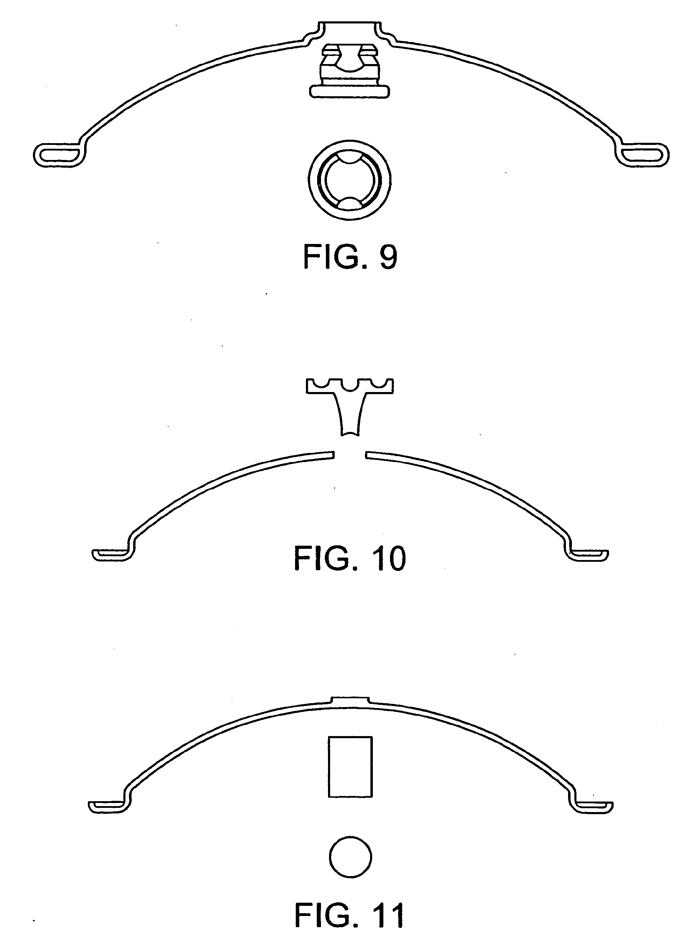

Le premier type, connu sous la dénomination "Nicholson valve" est illustré sur la figure 9. Dans ce cas, la valve est appliquée sur la bouteille avant l'injection de gaz propulseur, de façon à être seulement partiellement engagée dans l'orifice ménagé dans le fond du conteneur. La valve laisse passer le gaz propulseur au moment de l'injection, puis la valve est poussée dans l'orifice de façon à le fermer complètement et à maintenir la pression dans le conteneur.

Le second type est connu sous la dénomination "umbrella valve" et est décrit sur la figure 10. Cette valve peut également être introduite dans l'orifice ménagé à cet effet sous le conteneur avant le remplissage. La valve laisse passer le gaz propulseur au moment de l'injection, puis, sous l'effet de la pression ainsi créée dans le conteneur, la valve ferme l'orifice de façon à maintenir la pression dans le conteneur.

Dans le troisième cas, "Rope Bung" valve, décrit sur la figure 11, le gaz propulseur est injecté dans l'orifice ménagé à cet effet dans le fond du conteneur, puis la valve (qui dans ce cas est plutôt un bouchon) est introduite dans l'orifice de façon à le fermer et à maintenir la pression dans le conteneur.

## Revendications

1. Procédé pour le conditionnement d'un dessert glacé, consistant mais malléable, et pour sa distribution sous pression à l'état foisonné, procédé dans lequel on dispose le produit dans un conteneur équipé d'un organe de distribution puis, après avoir mis ledit organe de distribution en position fermée, on pressurise ledit conteneur par un gaz propulseur à une pression suffisante pour assurer une distribution convenable compte tenu de la consistance du produit à distribuer et des caractéristiques de l'organe de distribution, **caractérisé par le fait que** :
a) on choisit un gaz propulseur sensiblement insoluble dans le produit à distribuer;
b) on choisit un gaz foisonneur différent du gaz propulseur et fortement soluble dans le produit à distribuer pour générer le foisonnement du produit à sa distribution, la quantité de gaz foisonneur mise en oeuvre étant définie en fonction du degré de foisonnement désiré à la distribution, la dissolution du gaz foisonneur dans le produit à distribuer étant assurée par mise en contact du gaz foisonneur avec ledit produit dans un freezer et
c) on assure le passage dudit produit à l'état pâteux puis sa distribution par ouverture de l'organe de distribution, ledit produit foisonnant au degré désiré, prédéterminé au remplissage comme décrit dans l'étape 1b, par détente du gaz foisonneur qui y est dissous.

2. Procédé selon la revendication 1, dans lequel on traite un mix pour crème glacée dans un freezer que l'on alimente en gaz foisonneur de manière à réaliser une congélation et un foisonnement partiels dudit mix, dans des conditions de température et de pression favorisant une bonne dissolution du gaz foisonneur dans ledit mix, notamment à une température d' environ 8°C à - 12°C en sortie et sous une pression constante d'égale à la pression atmosphérique à 10 bars au dessus de la pression atmosphérique dans le freezer.

3. Procédé selon la revendication 1, dans lequel on utilise comme gaz foisonneur un gaz fortement soluble dans le mix, de préférence choisi parmi le protoxyde d'azote (N₂O) et le dioxyde de carbone.

4. Procédé selon la revendication 1, dans lequel on utilise comme gaz propulseur du diazote ou de l'air comprimé ayant un point de rosée inférieur à la température minimale à laquelle le conteneur sera soumis entre la fabrication du produit et son utilisation

5. Procédé selon l'une des revendications 1, 2, 3 et 4, dans lequel on met en place le mix partiellement congelé et partiellement foisonné dans le conteneur au moyen d'un dispositif de dosage assurant le maintient de la pression le plus proche possible de la pression initiale dans le freezer dans les conduits et dans l'unité de dosage, notamment en exerçant une contre pression le plus proche possible en amont de la buse de dosage, de manière à limiter l' expansion du volume du produit lors du remplissage par détente partielle du gaz foisonneur.

6. Procédé selon l'une des revendications 1, 2, 3 et 4, dans lequel on utilise comme dispositif de remplissage une buse de dosage animée d'un mouvement de monte et baisse permettant le remplissage en remontant depuis le fond du conteneur du type dit "bottom up filler", de manière à optimiser le remplissage et à éviter la formation de poches vides de produit.

7. Procédé selon la revendication 1, dans lequel on réalise le remplissage du conteneur suffisamment rapidement avant qu'une expansion se manifeste ou alternativement hermétiquement sous pression.

8. Procédé selon l'une des revendications 1, 2, 3 et 4, dans lequel on réalise le remplissage du conteneur au travers l'organe de distribution, le piston étant alors positionné juste sous l'organe de distribution.

9. Procédé selon l'une desrevendications 1, 2, 3 et 4, dans lequel on utilise comme conteneur un récipient rigide, dans lequel on introduit d'une part le produit à conditionner qui contient la quantité de gaz foisonneur nécessaire pour obtenir l'état foisonné souhaité du produit distribué et d'autre part le gaz propulseur à la pression désirée pour la distribution.

10. Procédé selon la revendication 9, dans lequel on utilise comme conteneur une poche souple (8) délimitant un volume relié à l'organe de distribution (3), poche que l'on dispose dans un récipient (1) rigide, sur lequel on fixe l'organe de distribution (3) associé à la poche (8) et que l'on injecte le gaz propulseur dans ledit récipient (1), à l'extérieur de la poche (8) le produit à distribuer étant introduit dans la poche (8).

11. Procédé selon la revendication 9, dans lequel on utilise comme conteneur un récipient rigide (1) cylindrique, dans lequel on dispose un piston coulissant (5), qui divise le récipient (1) en deux compartiments, dont l'un est fermé par l'organe de distribution (3) alors que l'autre comporte une valve (4) permettant l'injection du gaz propulseur, le produit à distribuer étant introduit dans le récipient (1) du côté du compartiment fermé par l'organe de distribution (3).

12. Procédé selon l'une des revendications 1 à 11, dans lequel pour que le produit prenne sa consistance de conditionnement, on abaisse sa température à une valeur inférieure à -10°C.

## Claims

1. Method for conditioning a thick but malleable frozen dessert, and for dispensing it under pressure in the expanded state, in which method the product is placed in a container equipped with a dispensing member, then, after having put the said dispensing member in the closed position, the said container is pressurized by a propellant gas to a pressure high enough to ensure suitable dispensing, given the consistency of the product to be dispensed and characteristics of the dispensing member, **characterized in that**:
a) a propellant gas which is substantially insoluble in the product to be dispensed is chosen;
b) an expansion gas which is different from the propellant gas and highly soluble in the product to be dispensed is chosen in order to generate the expansion of the product when it is dispensed, the amount of expansion gas used being defined depending on the degree of expansion desired on dispensing, the dissolution of the expansion gas in the product to be dispensed being provided by putting the expansion gas in contact with the said product in a freezer and
c) the said product passes to the pasty state then it is dispensed by opening the dispensing member, the said product being expanded to the desired degree, predetermined at filling as described in step 1b, by expanding the expansion gas which is dissolved therein.

2. Method according to claim 1,
in which an ice-cream mix is treated in a freezer which is supplied with expansion gas so as to partially freeze and expand the said mix, under temperature and pressure conditions promoting good dissolution of the expansion gas in the said mix, especially at a temperature of about 8°C to -12 °C at the output and at a constant pressure equal to atmospheric pressure up to 10 bars above atmospheric pressure in the freezer.

3. Method according to claim 1,
in which a gas that is highly soluble in the mix, preferably chosen from nitrous oxide (N₂O) and carbon dioxide, is used as an expansion gas.

4. Method according to claim 1,
in which dinitrogen or compressed air having a dewpoint less than the minimum temperature to which the container will be subjected between manufacture of the product and its use is used as propellant gas.

5. Method according to one of claims 1, 2, 3 and 4,
in which the partly frozen and partly expanded mix is placed in the container by means of a metering device ensuring the pressure is kept as close as possible to the initial pressure in the freezer, in the pipes and in the metering unit, especially by exerting a counterpressure as close as possible upstream from the metering nozzle, so as to limit the expansion of the volume of the product during filling by partial expansion of the expansion gas.

6. Method according to one of claims 1, 2, 3 and 4,
in which a metering nozzle moving with an up and down movement is used as filling device, allowing filling by rising from the bottom of the container, of the type called "bottom-up filler", so as to optimize the filling and to prevent the formation of pockets free of product.

7. Method according to claim 1,
in which the container is filled sufficiently quickly before expansion occurs or, alternatively, hermetically under pressure.

8. Method according to one of claims 1, 2, 3 and 4,
in which the container is filled through the dispensing member, the piston then being positioned just under the dispensing member.

9. Method according to one of claims 1, 2, 3 and 4,
in which a rigid receptacle is used as container, into which, on the one hand, the product to be packaged which contains the amount of expansion gas needed to obtain the desired expanded state of the dispensed product is introduced, and, on the other hand, the propellant gas is introduced at the pressure desired for the dispensing.

10. Method according to claim 9,
in which a flexible pouch (8) defining a volume connected to the dispensing member (3) is used as container, which pouch is placed in a rigid receptacle (1), to which the dispensing member (3) associated with the pouch (8) is fastened, and the propellant gas is injected into the said receptacle (1), outside the pouch (8), the product to be dispensed being introduced into the pouch (8).

11. Method according to claim 9,
in which a rigid cylindrical receptacle (1) is used as container, in which receptacle a sliding piston (5) is placed, which divides the receptacle (1) into two compartments, one of which is closed by the dispensing member (3) while the other has a valve (4) enabling the propellant gas to be injected, the product to be dispensed being introduced into the receptacle (1) from the side of the compartment closed by the dispensing member (3).

12. Method according to one of claims 1 to 11,
in which the temperature of the product is lowered to a value below -10°C so that it takes on its packaging consistency.

## Patentansprüche

1. Verfahren zum Konditionieren einer dickflüssigen, aber geschmeidigen gefrorenen Süssspeise und zu ihrer Ausgabe unter Druck im expandierten Zustand, wobei das Produkt in einen mit einem Ausgabeelement ausgestatteten Behälter angeordnet wird, und dannach, nachdem das Ausgabeelement in eine geschlossene Position gebracht worden ist, der Behälter durch ein Treibgas unter einen ausreichenden Druck gesetzt wird, um in Anbetracht der Geschmeidigkeit des auszugebenden Produkts und der Eigenschaften des Ausgabeelements eine angemessene Ausgabe zu gewährleisten, **dadurch gekennzeichnet, dass**
a) ein im auszugebenden Produkt im Wesentlichen unlösliches Treibgas gewählt wird;
b) ein Expansionsgas ausgewählt wird, das sich vom Treibgas unterscheidet und, das im auszugebenden Produkt in hohem Maße löslich ist, um bei der Ausgabe des Produkts seine Expansion hervorzurufen, wobei die Menge an verwendetem Expansionsgas abhängig vom bei der Ausgabe gewünschten Expansionsgrad ist, wobei die Auflösung des Expansionsgases im auszugebenden Produkt **dadurch** erbracht wird, dass das Expansionsgas mit dem Produkt in einer Gefriervorrichtung in Kontakt gebracht wird, und
c) das Produkt in einen teigartigen oder dickflüssigen Zustand gebracht wird, dann durch Öffnen des Ausgabeelements ausgegeben wird, wobei das Produkt durch Ausdehnung des darin aufgelösten Expansionsgases zum gewünschten, bei Auffüllen, wie im Schritt 1b beschrieben, vorausbestimmten Grad expandiert.

2. Verfahren nach Anspruch 1,
in dem ein Eiscreme-Mix in einer Gefriervorrichtung bearbeitet wird, wobei der Gefriervorrichtung Expansionsgas zugeführt wird, so dass ein teilweises Einfrieren und Expandieren der Mischung realisiert wird bei Temperatur- und Druckbedingungen, die eine gute Auflösung des Expansionsgases in der Mischung begünstigen, insbesondere bei einer Ausgangstemperatur von ungefähr 8°C bis -12° C und unter einem konstanten Druck, der dem Luftdruck bei 10 bars über dem Luftdruck in der Gefriervorrichtung entspricht.

3. Verfahren nach Anspruch 1,
in welchem als Expansionsgas ein in der Mischung stark lösliches Gas, das vorzugsweise aus Distickstoffmonoxid (N20) und Kohlendioxid ausgewählt wird, verwendet wird.

4. Verfahren nach Anspruch 1,
in welchem als Treibgas Distickstoff oder Druckluft aufweisend einen Taupunkt verwendet wird, der unter der minimalen Temperatur, bei der der Behälter zwischen Herstellung des Produkts und dessen Benutzung ausgesetzt wird.

5. Verfahren nach einem der Ansprüche 1, 2, 3 und 4, in welchem die teilweise gefrorene und teilweise expandierte Mischung in den Behälter mittels einer Dosiervorrichtung eingesetzt wird, die ein Erhalten des Drucks so nah wie möglich am ursprünglichen Druck in der Gefriervorrichtung, in den Leitungen und in der Dosiereinheit gewährleistet, insbesondere durch Ausüben eines Gegendrucks so nah wie möglich stromaufwärts der Dosierdüse, um so während der Befüllung die Expansion des Volumens des Produkts durch partielle Ausdehnung des Expansionsgases zu begrenzen.

6. Verfahren nach einem der Ansprüche 1, 2, 3 und 4, in dem als Auffüllungsvorrichtung eine Dosierdüse mit einer auf und ab Bewegung benutzt wird, wobei die Dosierdüse durch Steigen ausgehend vom Boden des Behälters des Typs "bottom up filler" das Auffüllen erlaubt, so dass das Auffüllen optimiert wird, und die Bildung von Blasen verhindert wird, die frei von Produkt sind.

7. Verfahren nach Anspruch 1,
in dem das Auffüllen des Behälters ausreichend schnell vor dem Eintritt einer Expansion oder alternativ hermetisch unter Druck realisiert wird.

8. Verfahren nach einem der Ansprüche 1, 2, 3 und 4, in dem das Auffüllen des Behälters durch das Ausgabeelement realisiert wird, wobei dann der Kolben unmittelbar unter dem Ausgabeelement positionniert ist.

9. Verfahren nach einem der Ansprüche 1, 2, 3 und 4, in dem als Behälter ein steifes Gefäß benutzt wird, in dem einerseits das zu verpackende Produkt, das die notwendige Menge an Expansionsgas beinhaltet, um den gewünschten Expansionszustand des ausgegebenes Produkts zu erwirken, und andererseits das Treibgas bei dem für die Ausgabe gewünschten Druck eingeführt wird.

10. Verfahren nach Anspruch 9,
in dem als Behälter ein flexibler Beutel (8) benutzt wird, der ein mit dem Ausgabeelement verbundenen Volumen definiert, wobei der Beutel in ein steifes Gefäß (1), auf dem das mit dem Beutel (8) verbundenen Ausgabeelement (3) befestigt wird, angeordnet wird, und wobei das Treibgas in diesem Gefäß (1) außerhalb des Beutels (8)injiziert wird, wobei das auszugebende Produkt in den Beutel (8) eingeführt wird.

11. Verfahren nach Anspruch 9,
in dem als Behälter ein steifes zylinderförmiges Gefäß benutzt wird, in dem ein gleitender Kolben (5) angeordnet wird, welcher das Gefäß (1) in zwei Kammern teilt, von denen eine durch das Ausgabeelement (3) geschlossen ist, während die andere ein Ventil (4) umfasst, welches die Injektion des Treibgases ermöglicht, wobei das auszugebende Produkt in das Gefäß (1) seitens der vom Ausgabeelement (3) geschlossenen Kammer eingeführt wird.

12. Verfahren nach einem der Ansprüche 1 bis 11, wobei die Temperatur des Produkts auf einen Wert unter -10 °C herabgesetzt wird, so dass das Produkt seine Verpackungsdichtigkeit erreicht.
